# EUROPÄISCHE PATENTSCHRIFT

(11) **EP 2 985 454 B1**
(45) Veröffentlichungstag und Bekanntmachung des Hinweises auf die Patenterteilung: **08.02.2017**
(21) Anmeldenummer: 14178216.9
(22) Anmeldetag: 23.07.2014
(51) Int. Cl.: F03D 13/00

(54) **Verfahren zum Prüfen eines Rotorblatteisdetektionssystems sowie Rotorblatteisdetektionssystem und Windenergieanlage zur Ausführung des Verfahrens**
Method for testing a rotor blade ice detection system and rotor blade ice detection system and wind turbine for implementing the method
Procédé de vérification d'un système de détection de glace sur les pâles d'un rotor ainsi que système de détection de glace sur les pâles d'un rotor et éolienne destinée à l'exécution du procédé

(43) Veröffentlichungstag der Anmeldung: 17.02.2016
(73) Patentinhaber: Nordex Energy GmbH, 22419 Hamburg (DE)
(72) Erfinder: MAGNUS, Stefan, DE - 22941 Delingsdorf (DE)
(74) Vertreter: Hauck Patentanwaltspartnerschaft mbB

(56) Entgegenhaltungen:
- EP-A1- 1 748 185
- EP-A2- 2 202 408
- WO-A1-2006/012827
- WO-A1-2013/091644

## Beschreibung

Rotorblatteisdetektionssysteme für Windenergieanlagen dienen dazu, bei einer Vereisung eines überwachten Rotorblatts eine Warnung auszugeben. Die Erfindung betrifft ein Verfahren, mit dem die ordnungsgemäße Funktion eines solchen Rotorblatteisdetektionssystems geprüft werden kann, sowie ein Rotorblatteisdetektionssystem und eine Windenergieanlage zur Ausführung des Verfahrens.

Ein Beispiel für ein solches System ist aus der Druckschrift EP 2 202 408 A2 bekannt.

Der eisfreie Zustand der Rotorblätter kann eine Voraussetzung für einen sicheren und wirtschaftlichen Betrieb von Windenergieanlagen sein. Starke Verschmutzungen und insbesondere Vereisungen der Rotorblätter können die Leistungsfähigkeit der Anlage beeinträchtigen. Sie können eine unmittelbare Gefahr darstellen, beispielsweise durch herabfallende Eisbrocken. Sie können überdies teils schwere Folgeschäden verursachen, insbesondere durch Unwuchten und/oder unterschiedliche aerodynamische Kräfte. Mit Rotorblatteisdetektionssystemen können Veränderungen an den Rotorblättern erkannt werden, so dass geeignete Gegenmaßnahmen getroffen werden können. Beispielsweise kann bei Feststellung einer Vereisung der Rotorblätter eine Rotorblattenteisungseinrichtung aktiviert oder die Windenergieanlage abgeschaltet werden.

Aus der Druckschrift EP 2 184 485 A2 ist ein Rotorblatteisdetektionssystem bekannt geworden, das die optischen Eigenschaften einer Rotorblattoberfläche mit geeigneten Sensoren erfasst, um eine Vereisung oder anhaftenden Schnee zu erkennen. Andere bekannte Rotorblatteisdetektionssysteme werten das dynamische Verhalten der Rotorblätter aus. Ein solches Rotorblatteisdetektionssystem ist aus der Druckschrift EP 2 565 444 A1 bekannt geworden. Bei diesem bekannten System sind Beschleunigungssensoren in den Rotorblättern angeordnet und eine auf Grundlage der Beschleunigungsdaten ermittelte Eigenfrequenz des Rotorblatts wird auf Änderungen überwacht. Um auf diesem Weg beispielsweise eine Vereisung zuverlässig erkennen zu können, sind eine Berücksichtigung zahlreicher Einflussfaktoren und komplexe mathematische Auswertungen erforderlich.

Es ist schwierig, die ordnungsgemäße Funktion eines solchen Rotorblatteisdetektionssystems zu prüfen. Hierzu muss eine Vereisung des Rotorblatts simuliert werden, beispielsweise indem Gewichte am Rotorblatt befestigt werden. Dies ist jedoch sehr aufwendig, da es nur vor Ort erfolgen kann und nicht oder nur sehr bedingt im laufenden Betrieb, so dass es eine Unterbrechung des Betriebs der Windenergieanlage erfordert.

Davon ausgehend ist es die Aufgabe der Erfindung, ein Verfahren zum Prüfen eines Rotorblatteisdetektionssystems für eine Windenergieanlage zur Verfügung zu stellen, das einfacher ausgeführt werden kann, sowie ein Rotorblatteisdetektionssystem und eine Windenergieanlage zur Ausführung dieses Verfahrens.

Diese Aufgabe wird gelöst durch das Verfahren mit den Merkmalen des Anspruchs 1. Vorteilhafte Ausgestaltungen sind in den sich anschließenden Unteransprüchen angegeben.

Das Verfahren dient zum Prüfen eines Rotorblatteisdetektionssystems für eine Windenergieanlage. Das Rotorblatteisdetektionssystem ist dazu ausgebildet, bei einer Vereisung eines überwachten Rotorblatts eine Warnung auszugeben. Das Verfahren weist die folgenden Schritte auf:
- Erfassen von Daten eines zu überwachenden Rotorblatts,
- Bereitstellen von mindestens einem Wert eines Betriebs- und/oder Umgebungsparameters,
- Modifizieren des mindestens einen bereitgestellten Werts derart, dass der mindestens eine modifizierte Wert von einem tatsächlichen Wert des Parameters abweicht,
- Auswerten der Daten des Rotorblatts und des mindestens einen modifizierten Werts durch das Rotorblatteisdetektionssystem und
- Prüfen, ob das Rotorblatteisdetektionssystem eine Warnung ausgibt.

Das Ausgeben einer Warnung kann auf unterschiedliche Art und Weise erfolgen. Beispielsweise kann das Rotorblatteisdetektionssystem an einem Ausgang ein Signal zur Verfügung stellen, das bei Ermittlung einer Vereisung einen vorgegebenen Wert annimmt. Das Signal kann beispielsweise an eine Windenergieanlagensteuerung oder an eine übergeordnete Steuerung eines Windparks übermittelt werden. Es obliegt dann der Windenergieanlagensteuerung oder der übergeordneten Steuerung, geeignete Gegenmaßnahmen zu treffen, beispielsweise die Windenergieanlage abzuschalten. Ebenfalls möglich ist, die Warnung zunächst lediglich zu protokollieren.

Mit dem Rotorblatteisdetektionssystem wird mindestens ein Rotorblatt überwacht. Bevorzugt erfolgt eine Überwachung sämtlicher Rotorblätter der betreffenden Windenergieanlage, da eine Vereisung in der Regel gleichmäßig bei allen Rotorblättern erfolgt. Das Rotorblatteisdetektionssystem kann die Daten eines bzw. jedes Rotorblatts mit jeweils mindestens einem geeigneten Sensor erfassen, der an oder in dem Rotorblatt angeordnet ist. Bei den von dem Sensor erfassten Messgrößen kann es sich beispielsweise um eine Beschleunigung, eine Dehnung, ein Biegemoment oder einen Biegeweg handeln. Andere Messgrößen, aus denen sich ebenfalls eine Eigenfrequenz des Rotorblattes ermitteln lässt, sind denkbar.

Das Verfahren umfasst außerdem ein Bereitstellen von mindestens einem Wert eines Betriebs- und/oder Umgebungsparameters. Betriebsparameter, die für das Verfahren relevant sein können, sind insbesondere eine Wirkleistung der Windenergieanlage, eine Drehzahl eines Rotors der Windenergieanlage oder ein Pitchwinkel der überwachten Rotorblätter. Werte dieser Betriebsparameter können insbesondere von einer Windenergieanlagensteuerung, die auch als Betriebsführung bezeichnet wird, zur Verfügung gestellt werden. Die Windenergieanlagensteuerung kann die Werte dieser Betriebsparameter bei der Steuerung des Betriebs der Windenergieanlage vorgeben, etwa wenn die Drehzahl des Rotors auf einen bestimmten Drehzahlsollwert geregelt wird. Alternativ können die Werte der Betriebsparameter mit Hilfe geeigneter Sensoren gemessen werden. Beispiele für Umgebungsparameter, die für das Verfahren relevant sein können, sind eine Rotorblatttemperatur, eine Umgebungstemperatur, eine Windgeschwindigkeit und eine Luftfeuchte bzw. Niederschlagsintensität. Anders als die genannten Betriebsparameter können diese Umgebungsparameter nicht ohne Weiteres von einer Windenergieanlagensteuerung beeinflusst werden. Sie werden daher in der Regel mit geeigneten Sensoren erfasst, beispielsweise mit einem an einer Rotorblattoberfläche angeordneten Thermometer zur Erfassung einer Oberflächentemperatur des Rotorblatts oder mit einem Anemometer zur Erfassung der Windgeschwindigkeit.

Bei dem Verfahren wird mindestens ein zur Verfügung gestellter Wert eines Betriebs- und/oder Umgebungsparameters so modifiziert, dass er von einem tatsächlichen Wert abweicht. Der Wert wird also relativ zu dem zur Verfügung gestellten Wert, der dem tatsächlichen Wert entspricht, verändert. Hierzu kann beispielsweise ein vorgegebener Offset addiert oder ein Modifizierungsfaktor angewendet werden. Ergebnis ist ein modifizierter Wert, der bewusst von den tatsächlichen Verhältnissen abweichende Betriebsbedingungen widerspiegelt.

Das Rotorblatteisdetektionssystem wertet dann die erfassten Daten des Rotorblatts und den mindestens einen modifizierten Wert aus. Zusätzlich zu dem mindestens einen modifizierten Wert kann das Rotorblatteisdetektionssystem dabei weitere ihm zur Verfügung gestellte Werte von Betriebs- und/oder Umgebungsparametern heranziehen. Einer oder mehrere der ausgewerteten Parameter können in der genannten Weise modifiziert worden sein, während ebenfalls einer oder mehrere Werte in der ursprünglich zur Verfügung gestellten, nicht modifizierten Größe ausgewertet werden können. Stellt das Rotorblatteisdetektionssystem bei der Auswertung fest, dass die ausgewerteten Daten auf eine Vereisung eines Rotorblatts hindeuten, gibt es eine Warnung aus.

Im letzten Verfahrensschritt erfolgt eine Überprüfung, ob das Rotorblatteisdetektionssystem eine Warnung ausgibt. Diese kann beispielsweise von einer Windenergieanlagensteuerung, die mit dem Rotorblatteisdetektionssystem verbunden ist, vorgenommen werden, alternativ von einer übergeordneten Steuerung beispielsweise eines Windparks. Ebenfalls möglich ist, dass das Rotorblatteisdetektionssystem die Prüfung in einem Testbetrieb selbst vornimmt.

Anders als bei der eingangs geschilderten Prüfmethode, bei der an einem Rotorblatt eine zusätzliche Masse angebracht wird, erfordert das erfindungsgemäße Verfahren keinerlei Veränderung der tatsächlichen Betriebsbedingungen des Rotorblatts. Es kann im laufenden Betrieb der Windenergieanlage ausgeführt werden und eignet sich somit gleichermaßen für eine Funktionsprüfung des Rotorblatteisdetektionssystems bei dessen Erstinstallation als auch bei regelmäßigen Wartungsarbeiten. Es kann sehr einfach festgestellt werden, ob das Rotorblatteisdetektionssystem auf den mindestens einen modifizierten Wert in einer vorgesehenen Weise reagiert, nämlich durch Ausgeben einer Warnung. Die von dem Rotorblatteisdetektionssystem ausgeführte Auswertung erfolgt bei dem Verfahren in der für den regulären Überwachungsbetrieb vorgesehenen Art und Weise. Insbesondere die unter Umständen fehleranfälligen Daten des Rotorblatts werden unverändert verarbeitet. Die Prüfung erfolgt unter realen Einsatzbedingungen und ist daher besonders aussagekräftig.

Das Modifizieren des mindestens einen zur Verfügung gestellten Werts kann sich insbesondere auf einen Betriebs- und/oder Umgebungsparameter beziehen, der einen Einfluss auf das dynamische Rotorblattverhalten hat. Das von dem Rotorblatteisdetektionssystem auf Grundlage der erfassten Daten des Rotorblatts charakterisierte, dynamische Verhalten des Rotorblatts weicht dann von der diesbezüglichen Erwartung bei Annahme des modifizierten Werts ab. In diesem Fall sollte das Rotorblatteisdetektionssystem eine Warnung ausgeben, sodass die ordnungsgemäße Funktion des Rotorblatteisdetektionssystems einfach zu überprüfen ist.

In einer Ausgestaltung umfasst das Auswerten der Daten des Rotorblatts durch das Rotorblatteisdetektionssystem ein Ermitteln einer realen Eigenfrequenz des zu überwachenden Rotorblatts. Die reale Eigenfrequenz ist eine aussagekräftige, das dynamische Rotorblattverhalten kennzeichnende Größe. Sie kann von dem Rotorblatteisdetektionssystem beispielsweise durch eine Fourier-Analyse aus Beschleunigungsdaten ermittelt werden. Die Eigenfrequenz des Rotorblatts wird von einer Vereisung des Rotorblatts, die mit einer Änderung der strukturellen oder aerodynamischen Eigenschaften des Rotorblatts einhergeht, beeinflusst.

In einer Ausgestaltung umfasst das Auswerten des mindestens einen modifizierten Werts durch das Rotorblatteisdetektionssystem ein Ermitteln einer erwarteten Eigenfrequenz des zu überwachenden Rotorblatts. Für diese Auswertung kann in dem Rotorblatteisdetektionssystem eine Berechnungsvorschrift oder eine insbesondere mehrdimensionale Tabelle über die Abhängigkeit der Eigenfrequenz von den zur Verfügung gestellten Betriebs- und/oder Umgebungsparametern hinterlegt sein. Diese Daten können für jeden Rotorblatttyp oder sogar für individuelle Rotorblätter in Modellrechnungen oder alternativ experimentell ermittelt worden sein. Ein Vergleich der realen Eigenfrequenz mit der erwarteten Eigenfrequenz gibt dann Aufschluss darüber, ob das tatsächliche dynamische Verhalten des Rotorblatts dem erwartungsgemäßen dynamischen Verhalten eines eisfreien Rotorblatts bei den jeweiligen Betriebs- und/oder Umgebungsbedingungen entspricht.

In einer Ausgestaltung gibt das Rotorblatteisdetektionssystem eine Warnung aus, falls die reale Eigenfrequenz kleiner ist als die erwartete Eigenfrequenz. Eine Verringerung der Eigenfrequenz deutet auf eine Vereisung des Rotorblatts hin.

In einer Ausgestaltung umfasst der mindestens eine Wert einen Betriebsparameter, der von einer Windenergieanlagensteuerung zur Verfügung gestellt wird. Viele das dynamische Verhalten des Rotorblatts beeinflussende Betriebsparameter sind für die Steuerung der Windenergieanlage erforderlich und liegen der Windenergieanlagensteuerung vor. Sie können daher besonders einfach von der Windenergieanlagensteuerung zur Verfügung gestellt werden.

In einer Ausgestaltung umfasst der mindestens eine Wert einen Umgebungsparameter, der von einem im oder am Rotorblatt angeordneten Sensor zur Verfügung gestellt wird. Bei dem Umgebungsparameter kann es sich beispielsweise um eine Rotorblatttemperatur, insbesondere an einer aerodynamischen Oberfläche des Rotorblatts oder im Inneren des Rotorblatts, handeln. Auf diese Weise können gezielt beispielsweise für eine Vereisung maßgebliche Parameter ausgewertet werden.

In einer Ausgestaltung umfasst der mindestens eine Wert eine gemessene Temperatur und der mindestens eine modifizierte Wert eine modifizierte Temperatur, die niedriger ist als die gemessene Temperatur. Beispielsweise kann beim Modifizieren des Werts der gemessenen Temperatur ein Offset im Bereich von 0,5° bis 50° abgezogen werden. Bei der gemessenen Temperatur kann es sich um eine Oberflächentemperatur am Rotorblatt oder um eine Temperatur im Inneren des Rotorblatts handeln. Wegen der temperaturabhängigen Elastizitäten der Komponenten steigen die Eigenfrequenzen des Rotorblatts bei niedrigen Temperaturen an. Die genannte Modifikation führt also zu einem modifizierten Wert der Eigenfrequenz, der größer ist als der reale Wert der Eigenfrequenz. Die negative Differenz zwischen der realen Eigenfrequenz und der erwarteten Eigenfrequenz des Rotorblatts wird als eine Vereisung des Rotorblatts bewertet und das Rotorblatteisdetektionssystem sollte bei ordnungsgemäßer Funktion eine Warnung ausgeben.

In einer Ausgestaltung umfasst der mindestens eine Wert eine reale Windgeschwindigkeit und eine reale Wirkleistung und der mindestens eine modifizierte Wert eine modifizierte Windgeschwindigkeit, die größer ist als die gemessene Windgeschwindigkeit, und eine modifizierte Wirkleistung, die größer ist als die reale Wirkleistung. Diese Ausgestaltung beruht auf der Erkenntnis, dass die Eigenfrequenz eines Rotorblatts unter Belastungen, wie sie bei hoher Windgeschwindigkeit und hoher Wirkleistung auftreten, ebenfalls ansteigt. Dies ist auf eine erhöhte Vorspannung des Rotorblatts infolge der mechanischen Belastungen zurückzuführen. Auch bei dieser Modifikation der zur Verfügung gestellten Werte ist die reale Eigenfrequenz niedriger ist als die erwartete Eigenfrequenz, so dass von einer Vereisung des Rotorblatts ausgegangen wird. Bei einem ordnungsgemäß funktionierenden Rotorblatteisdetektionssystem sollte diese Bewertung zur Ausgabe einer Warnung führen.

In einer Ausgestaltung entsprechen die modifizierte Windgeschwindigkeit und die modifizierte Wirkleistung einer Leistungskennlinie der Windenergieanlage. Die Leistungskennlinie gibt den Zusammenhang zwischen Windgeschwindigkeit und Wirkleistung der Windenergieanlage an. Das modifizierte Wertepaar aus Windgeschwindigkeit und Wirkleistung entspricht daher einem auch in der Realität vorkommenden Arbeitspunkt der Windenergieanlage, sodass die Prüfung des Rotorblatteisdetektionssystems unter realistischen Bedingungen vorgenommen wird.

In einer Ausgestaltung wird das Prüfen, ob das Rotorblatteisdetektionssystem eine Warnung ausgibt, von einer Windenergieanlagensteuerung durchgeführt. In diesem Fall kann die Windenergieanlage die ordnungsgemäße Funktion des Rotorblatteisdetektionssystems selbst prüfen.

In einer Ausgestaltung wird das Modifizieren des mindestens einen Werts von dem Rotorblatteisdetektionssystem ausgeführt. In diesem Fall kann das Verfahren ausgeführt werden, ohne tiefgreifende Veränderungen in der Windenergieanlagensteuerung vornehmen zu müssen. Es genügt, das Rotorblatteisdetektionssystem in einen Testbetrieb zu versetzen, in dem es das Verfahren ausführt.

In einer Ausgestaltung wird das Modifizieren des mindestens einen Werts von einer Windenergieanlagensteuerung ausgeführt. In diesem Fall werden dem Rotorblatteisdetektionssystem zur Ausführung des Verfahrens bereits modifizierte Werte von der Windenergieanlagensteuerung übergeben. Ein Eingriff in das Rotorblatteisdetektionssystem ist dann nicht erforderlich, sondern eine entsprechend angepasste Windenergieanlage kann das Verfahren mit einem herkömmlichen Rotorblatteisdetektionssystem ausführen.

Die oben genannte Aufgabe wird ebenfalls gelöst durch das Rotorblatteisdetektionssystem für eine Windenergieanlage mit den Merkmalen des Anspruchs 13. Das Rotorblatteisdetektionssystem hat
- einen Sensor zur Anordnung an oder in einem zu überwachenden Rotorblatt,
- eine Schnittstelle zum Einlesen von Werten mindestens eines Betriebs- und/oder Umgebungsparameters, und
- eine Auswerteeinrichtung zum Auswerten von mit dem Sensor erfassten Daten und von über die Schnittstelle eingelesenen Werten, wobei die Auswerteeinrichtung dazu ausgebildet ist, bei Anzeichen einer Vereisung des zu überwachenden Rotorblatts eine Warnung auszugeben, wobei
- das Rotorblatteisdetektionssystem eine Einrichtung zum Modifizieren mindestens eines über die Schnittstelle eingelesenen Werts derart, dass der mindestens eine modifizierte Wert von einem realen Wert des Parameters abweicht, aufweist und dazu ausgebildet ist, der Auswerteeinrichtung in einem Prüfbetrieb den mindestens einen modifizierten Wert zur Auswertung zur Verfügung zu stellen.

Das Rotorblatteisdetektionssystem ist insbesondere zur Ausführung des Verfahrens nach einem der Ansprüche 1 bis 12 ausgebildet. Die Schnittstelle kann eine Hardware-Schnittstelle oder eine Software-Schnittstelle sein. Mit dem Einlesen von Werten ist jede Form des Datentransfers zum Rotorblatteisdetektionssystem hin gemeint. Die Einrichtung zum Modifizieren kann ebenso wie die Auswerteeinrichtung ganz oder teilweise in Form von Software realisiert sein.

Zu den Merkmalen und Vorteilen des Rotorblatteisdetektionssystems wird auf die vorstehenden Erläuterungen des Verfahrens verwiesen, die entsprechend gelten.

Die oben genannte Aufgabe wird ebenfalls gelöst durch die Windenergieanlage mit den Merkmalen des Anspruchs 15. Die Windenergieanlage hat:
- ein Rotorblatt,
- ein Rotorblatteisdetektionssystem, das einen in oder an dem Rotorblatt angeordneten Sensor, eine Schnittstelle zum Einlesen von Werten mindestens eines Betriebs- und/oder Umgebungsparameters und eine Auswerteeinrichtung zum Auswerten von mit dem Sensor erfassten Daten und von über die Schnittstelle eingelesenen Werten aufweist, wobei die Auswerteeinrichtung dazu ausgebildet ist, bei Anzeichen einer Vereisung des zu überwachenden Rotorblatts eine Warnung auszugeben, und
- eine Windenergieanlagensteuerung, die mit der Schnittstelle verbunden und dazu ausgebildet ist, dem Rotorblatteisdetektionssystem Werte des mindestens einen Betriebs- und/oder Umgebungsparameters zur Verfügung zu stellen, wobei die Windenergieanlagensteuerung
- eine Einrichtung zum Modifizieren mindestens eines Werts eines Betriebs- und/oder Umgebungsparameters derart, dass der mindestens eine modifizierte Wert von einem tatsächlichen Wert des Parameters abweicht, aufweist,
- dazu ausgebildet ist, dem Rotorblatteisdetektionssystem in einem Prüfbetrieb den mindestens einen modifizierten Wert zur Auswertung zur Verfügung zu stellen, und
- dazu ausgebildet ist, zu prüfen, ob das Rotorblatteisdetektionssystem nach Auswertung des mindestens einen modifizierten Werts eine Warnung ausgibt.

Die Windenergieanlage ist insbesondere zur Ausführung des Verfahrens nach einem der Ansprüche 1 bis 12 ausgebildet.

Zu den Merkmalen und Vorteilen der Windenergieanlage wird auf die vorstehenden Erläuterungen des Verfahrens und des Rotorblatteisdetektionssystems verwiesen, die entsprechend gelten.

Die Erfindung wird nachfolgend anhand von in Figuren dargestellten Ausführungsbeispielen näher erläutert. Es zeigen:
- Fig. 1: eine schematische Darstellung einer Windenergieanlage mit einer Windenergieanlagensteuerung und einem Rotorblatteisdetektionssystem,
- Fig. 2: eine weitere schematische Darstellung einer Windenergieanlage mit einer Windenergieanlagensteuerung und einem Rotorblatteisdetektionssystem,
- Fig. 3: ein Diagramm zur Abhängigkeit der Eigenfrequenz eines Rotorblatts von seiner Masse,
- Fig. 4: ein Diagramm zur Abhängigkeit der Eigenfrequenz eines Rotorblatts von seiner Temperatur,
- Fig. 5: ein Diagramm zur Abhängigkeit der Eigenfrequenz eines Rotorblatts von einer Windgeschwindigkeit und einer Wirkleistung.

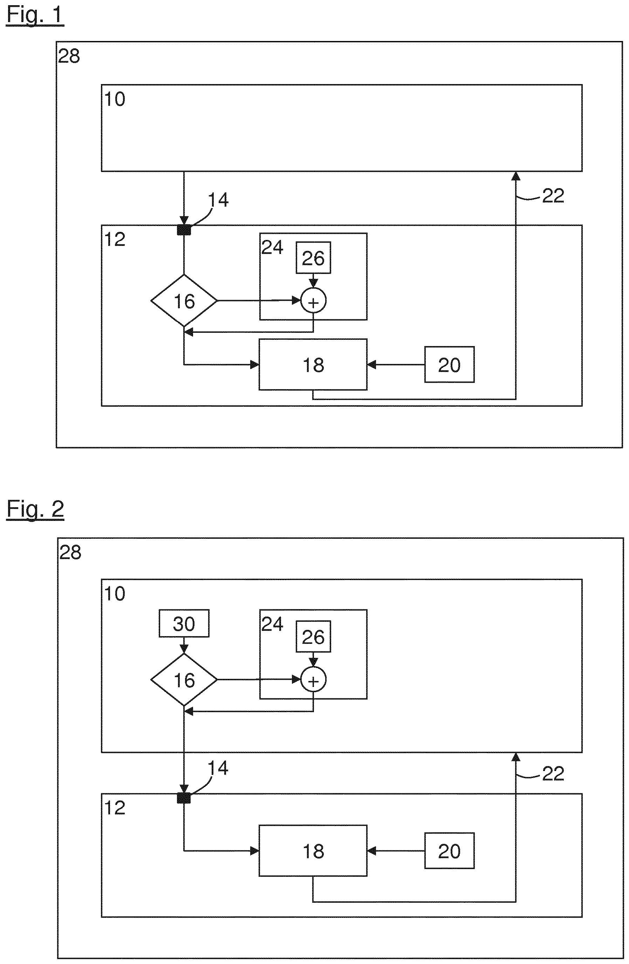

Figur 1 zeigt schematisch eine Windenergieanlage 28 mit einer Windenergieanlagensteuerung 10 und einem Rotorblatteisdetektionssystem 12. Die Windenergieanlagensteuerung 10 steuert den Betrieb der Windenergieanlage 28. Sie kann auch als zentrale Betriebsführung bezeichnet werden.

Das Rotorblatteisdetektionssystem 12 umfasst eine Schnittstelle 14, über die dem Rotorblatteisdetektionssystem 12 von der Windenergieanlagensteuerung 10 Werte unterschiedlicher Betriebs- und Umgebungsparameter zur Verfügung gestellt werden. Im Beispiel sind dies eine reale Windgeschwindigkeit, eine reale Wirkleistung der Windenergieanlage, eine reale Drehzahl eines Rotors der Windenergieanlage und ein realer Pitchwinkel der überwachten Rotorblätter der Windenergieanlage. Diese Werte werden von dem Rotorblatteisdetektionssystem 12 über die Schnittstelle 14 eingelesen.

Die Auswahleinrichtung 16 ermöglicht eine Auswahl, ob das Rotorblatteisdetektionssystem 12 im regulären Betrieb zur Überwachung eines Rotorblatts eingesetzt werden soll oder in einem Testbetrieb zum Prüfen der ordnungsgemäßen Funktion des Rotorblatteisdetektionssystems 12.

Im regulären Betrieb werden die über die Schnittstelle 14 eingelesenen Werte unverändert der Auswerteeinrichtung 18 des Rotorblatteisdetektionssystems 12 zugeführt. Die Auswerteeinrichtung 18 kann beispielsweise in einem Maschinenhaus der Windenergieanlage angeordnet sein, ebenso wie die Windenergieanlagensteuerung 10. Alternativ kann die Auswerteeinrichtung 18 auch in einem Rotor, insbesondere in dem zu überwachenden Rotorblatt der Windenergieanlage 28 untergebracht sein.

Die Auswerteeinrichtung 18 ist verbunden mit mindestens einem an dem zu überwachenden Rotorblatt angeordneten Beschleunigungssensor 20, der der Auswerteeinrichtung 18 Beschleunigungsdaten zur Verfügung stellt.

Die Auswerteeinrichtung 18 wertet die Betriebs- und Umgebungsparameter sowie die Beschleunigungsdaten aus, wobei sie auf Grundlage der Beschleunigungsdaten 20 eine aktuelle Eigenfrequenz des überwachten Rotorblatts und auf Grundlage der Betriebs- und Umgebungsparameter eine erwartete Eigenfrequenz des Rotorblatts ermittelt. Liefert die Auswertung Hinweise auf eine Vereisung des Rotorblatts, insbesondere falls die reale Eigenfrequenz um mehr als ein vorgegebenes Maß geringer ist als die erwartete Eigenfrequenz, gibt das Rotorblatteisdetektionssystem 12 eine Warnung aus, die an die Windenergieanlagensteuerung 10 übermittelt wird, wie durch den Pfeil 22 angedeutet.

Wird mit der Auswahleinrichtung 16 ein Testbetrieb zum Prüfen des Rotorblatteisdetektionssystems 12 ausgewählt, kommt die Einrichtung zum Modifizieren 24 des Rotorblatteisdetektionssystems 12 zum Einsatz. Diese fügt mindestens einem dem Rotorblatteisdetektionssystem 12 über die Schnittstelle 14 zur Verfügung gestellten Betriebs- und/oder Umgebungsparameter einen Offset 26 hinzu. Der auf diese Weise modifizierte Wert wird dann an die Auswerteeinrichtung 18 übermittelt und von dieser in der bereits erläuterten Weise ausgewertet.

Die Windenergieanlagenrotorblattsteuerung 10 prüft im Testbetrieb, ob das Rotorblatteisdetektionssystem 12 infolge der Modifikation des mindestens einen Werts eine Warnung ausgibt.

Im Ausführungsbeispiel der Figur 1 ist die Windenergieanlagensteuerung 10 dazu eingerichtet, über die Schnittstelle 14 und die Auswahleinrichtung 16 den Testbetrieb des Rotorblatteisdetektionssystems zu aktivieren. Außerdem kann sie auf Warnungen des Rotorblatteisdetektionssystems, die auf den Testbetrieb zurückzuführen sind, angemessen reagieren. Im Übrigen unterscheidet sie sich nicht von einer herkömmlichen Windenergieanlagensteuerung.

Im Ausführungsbeispiel der Figur 2 findet ein Rotorblatteisdetektionssystem 12 Verwendung, das hinsichtlich der Schnittstelle 14, der Auswerteeinrichtung 18 und des Beschleunigungssensors 20 dem Rotorblatteisdetektionssystem 12 aus Fig. 1 gleicht.

Die Einrichtung zum Modifizieren 24 entspricht ebenfalls der Einrichtung zum Modifizieren 24 aus Figur 1, ist jedoch nicht in das Rotorblatteisdetektionssystem 12, sondern in die Windenergieanlagensteuerung 10 integriert. Dies gilt entsprechend für die Auswahleinrichtung 16, die dem Aktivieren des Testbetriebs dient. Die Werte der Betriebs- und/oder Umgebungsparameter stehen in der Windenergieanlagensteuerung 10 zur Verfügung, wie durch den Kasten 30 angedeutet. Im Testbetrieb werden dann über die Schnittstelle 14 die bereits modifizierten Werte an das Rotorblatteisdetektionssystem 12 übergeben.

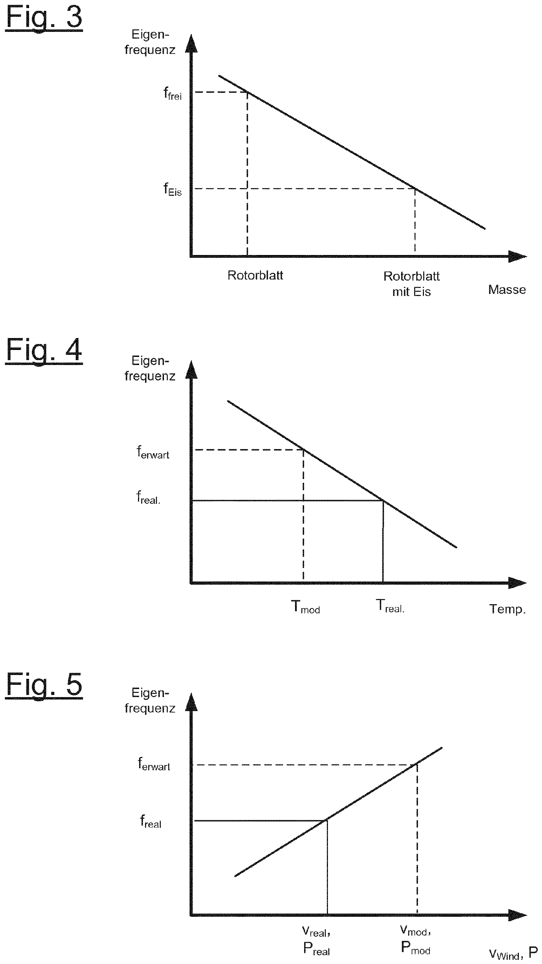

Anhand der Diagramme der Figuren 3 bis 5 wird die Abhängigkeit der Eigenfrequenz von unterschiedlichen Parametern erläutert. Figur 3 zeigt die Abhängigkeit der Eigenfrequenz eines Windenergieanlagenrotorblatts von seiner Masse. Man erkennt, dass die Eigenfrequenz mit zunehmender Masse kleiner wird. Beispielhaft aufgetragen ist relativ weit links die Masse eines Rotorblatts in seinem Ausgangszustand, ohne Vereisung. Dieser Masse ist eine relativ große Eigenfrequenz f_{frei} zugeordnet. Weiter rechts ist die Masse desselben Rotorblatts mit Eis aufgetragen, der eine deutlich niedrigere Eigenfrequenz f_{Eis} zugeordnet ist.

Bei der Erfindung wertet das Rotorblatteisdetektionssystem 12 die von dem Beschleunigungssensor 20 erhaltenen Beschleunigungsdaten aus und ermittelt auf dieser Grundlage die aktuelle Eigenfrequenz des überwachten Rotorblatts.

Figur 4 stellt die Abhängigkeit der Eigenfrequenz des Rotorblatts von einer Blatttemperatur dar. Bei einer gemessenen Temperatur Tᵣₑₐₗ weist das Rotorblatt die Eigenfrequenz fᵣₑₐₗ auf. Man erkennt, dass die Eigenfrequenz des Rotorblatts mit steigender Temperatur abnimmt. In einem Ausführungsbeispiel der Erfindung wird der Wert der gemessenen Temperatur Tᵣₑₐₗ modifiziert, indem ein negatives Offset zu dem gemessenen Wert addiert wird. Dieser modifizierte Wert T_{mod} wird dann, gemeinsam mit weiteren, nicht modifizierten Betriebs- und Umgebungsparametern von dem Rotorblatteisdetektionssystem 12 ausgewertet. Diese Auswertung führt zu einer erwarteten Eigenfrequenz f_{erwart}, die wesentlich höher ist als die bei der gemessenen Temperatur Tᵣₑₐₗ tatsächlich vorliegende Eigenfrequenz fᵣₑₐₗ. Aus der negativen Differenz zwischen fᵣₑₐₗ und f_{erwart} schließt die Auswerteeinrichtung auf eine Massenzunahme und somit auf Eisansatz, welcher mit einer Warnung quittiert wird.

Fig. 5 veranschaulicht die Abhängigkeit der Eigenfrequenz von einer mechanischen Belastung, die durch den Umgebungsparameter Windgeschwindigkeit v_{wind} und den Betriebsparameter Wirkleistung P beschrieben wird. Man erkennt, dass die Eigenfrequenz mit zunehmender mechanischer Belastung zunimmt. In diesem Ausführungsbeispiel der Erfindung wird der Wert der realen Windgeschwindigkeit vᵣₑₐₗ bzw. der realen Wirkleistung Pᵣₑₐₗ modifiziert, indem ein positives Offset zu den gemessenen realen Werten addiert wird. Dieser modifizierte Wert v_{mod} bzw. P_{mod} wird dann, gemeinsam mit weiteren, nicht modifizierten Betriebs- und Umgebungsparametern von dem Rotorblatteisdetektionssystem 12 ausgewertet. Diese Auswertung führt zu einer erwarteten Eigenfrequenz f_{erwart}, die wesentlich höher ist als die bei der tatsächlich vorliegenden Windgeschwindigkeit vᵣₑₐₗ bzw. Wirkleistung Pᵣₑₐₗ aus den Beschleunigungsdaten berechnete, reale Eigenfrequenz fᵣₑₐₗ. Aus der negativen Differenz zwischen fᵣₑₐₗ und f_{erwart} schließt die Auswerteeinrichtung auf eine Massenzunahme und somit auf Eisansatz, welcher mit einer Warnung quittiert wird.

### Liste der verwendeten Bezugszeichen:

- 10: Windenergieanlagensteuerung
- 12: Rotorblatteisdetektionssystem
- 14: Schnittstelle
- 16: Auswahleinrichtung
- 18: Auswerteeinrichtung
- 20: Beschleunigungssensor
- 22: Pfeil
- 24: Einrichtung zum Modifizieren
- 26: Offset
- 28: Windenergieanlage
- 30: Kasten

## Patentansprüche

1. Verfahren zum Prüfen eines Rotorblatteisdetektionssystems (12) für eine Windenergieanlage (28), wobei das Rotorblatteisdetektionssystem (12) dazu ausgebildet ist, bei einer Vereisung oder Beschädigung eines überwachten Rotorblatts eine Warnung auszugeben, und das Verfahren die folgenden Schritte aufweist:
• Erfassen von Daten eines zu überwachenden Rotorblatts,
• Bereitstellen von mindestens einem Wert eines Betriebs- und/oder Umgebungsparameters,
• Modifizieren des mindestens einen bereitgestellten Werts derart, dass der mindestens eine modifizierte Wert von einem tatsächlichen Wert des Parameters abweicht,
• Auswerten der Daten und des mindestens einen modifizierten Werts durch das Rotorblatteisdetektionssystem (12) und
• Prüfen, ob das Rotorblatteisdetektionssystem (12) eine Warnung ausgibt.

2. Verfahren nach Anspruch 1, **dadurch gekennzeichnet, dass** das Auswerten der Daten durch das Rotorblatteisdetektionssystem (12) ein Ermitteln einer realen Eigenfrequenz des zu überwachenden Rotorblatts umfasst.

3. Verfahren nach Anspruch 1 oder 2, **dadurch gekennzeichnet, dass** das Auswerten des mindestens einen modifizierten Werts durch das Rotorblatteisdetektionssystem (12) ein Ermitteln einer erwarteten Eigenfrequenz des zu überwachenden Rotorblatts umfasst.

4. Verfahren nach Anspruch 2 und 3, **dadurch gekennzeichnet, dass** das Rotorblatteisdetektionssystem (12) eine Warnung ausgibt, falls die reale Eigenfrequenz kleiner ist als die erwartete Eigenfrequenz.

5. Verfahren nach einem der Ansprüche 1 bis 4, **dadurch gekennzeichnet, dass** der mindestens eine Wert einen Betriebsparameter umfasst, der von einer Windenergieanlagensteuerung (10) zur Verfügung gestellt wird.

6. Verfahren nach einem der Ansprüche 1 bis 5, **dadurch gekennzeichnet, dass** der mindestens eine Wert einen Umgebungsparameter umfasst, der von einem im oder am Rotorblatt angeordneten Sensor zur Verfügung gestellt wird.

7. Verfahren nach einem der Ansprüche 1 bis 6, **dadurch gekennzeichnet, dass** der mindestens eine Wert eine gemessene reale Temperatur umfasst und der mindestens eine modifizierte Wert eine modifizierte Temperatur, die niedriger ist als die gemessene Temperatur.

8. Verfahren nach einem der Ansprüche 1 bis 7, **dadurch gekennzeichnet, dass** der mindestens eine Wert eine gemessene reale Windgeschwindigkeit und eine reale Wirkleistung umfasst und der mindestens eine modifizierte Wert eine modifizierte Windgeschwindigkeit, die größer ist als die gemessene reale Windgeschwindigkeit, und eine modifizierte Wirkleistung, die größer ist als die reale Wirkleistung, umfasst.

9. Verfahren nach Anspruch 8, **dadurch gekennzeichnet, dass** die modifizierte Windgeschwindigkeit und die modifizierte Wirkleistung einer Leistungskennlinie der Windenergieanlage (28) entsprechen.

10. Verfahren nach einem der Ansprüche 1 bis 9, **dadurch gekennzeichnet, dass** das Prüfen, ob das Rotorblatteisdetektionssystem (12) eine Warnung ausgibt, von einer Windenergieanlagensteuerung (10) durchgeführt wird.

11. Verfahren nach einem der Ansprüche 1 bis 10, **dadurch gekennzeichnet, dass** das Modifizieren des mindestens einen Werts von dem Rotorblatteisdetektionssystem (12) ausgeführt wird.

12. Verfahren nach einem der Ansprüche 1 bis 10, **dadurch gekennzeichnet, dass** das Modifizieren des mindestens einen Werts von einer Windenergieanlagensteuerung (10) ausgeführt wird.

13. Rotorblatteisdetektionssystem (12) für eine Windenergieanlage (28) mit
• einem Sensor (20) zur Anordnung an oder in einem zu überwachenden Rotorblatt,
• einer Schnittstelle (14) zum Einlesen von Werten mindestens eines Betriebs- und/oder Umgebungsparameters, und
• einer Auswerteeinrichtung (18) zum Auswerten von mit dem Sensor (20) erfassten Daten und von über die Schnittstelle (14) eingelesenen Werten, wobei die Auswerteeinrichtung (18) dazu ausgebildet ist, bei Anzeichen einer Vereisung des zu überwachenden Rotorblatts eine Warnung auszugeben, **dadurch gekennzeichnet, dass**
• das Rotorblatteisdetektionssystem (12) eine Einrichtung zum Modifizieren (24) mindestens eines über die Schnittstelle (14) eingelesenen Werts derart, dass der mindestens eine modifizierte Wert von einem tatsächlichen Wert des Parameters abweicht, aufweist und dazu ausgebildet ist, der Auswerteeinrichtung (18) in einem Prüfbetrieb den mindestens einen modifizierten Wert zur Auswertung zur Verfügung zu stellen.

14. Windenergieanlage (28) mit einem Rotorblatteisdetektionssystem (12) nach Anspruch 13.

15. Windenergieanlage (28) mit
• einem Rotorblatt,
• einem Rotorblatteisdetektionssystem (12), das einen in oder an dem Rotorblatt angeordneten Sensor (20), eine Schnittstelle (14) zum Aufnehmen von Werten mindestens eines Betriebs- und/oder Umgebungsparameters und eine Auswerteeinrichtung (18) zum Auswerten von mit dem Sensor (20) erfassten Daten und von über die Schnittstelle (14) aufgenommenen Werten aufweist, wobei die Auswerteeinrichtung (18) dazu ausgebildet ist, bei Anzeichen einer Vereisung des zu überwachenden Rotorblatts eine Warnung auszugeben, und
• einer Windenergieanlagensteuerung (10), die mit der Schnittstelle (10) verbunden und dazu ausgebildet ist, dem Rotorblatteisdetektionssystem (12) Werte des mindestens einen Betriebs- und/oder Umgebungsparameters zur Verfügung zu stellen, **dadurch gekennzeichnet, dass** die Windenergieanlagensteuerung (10)
• eine Einrichtung zum Modifizieren (24) mindestens eines Werts eines Betriebs- und/oder Umgebungsparameters derart, dass der mindestens eine modifizierte Wert von einem tatsächlichen Wert des Parameters abweicht, aufweist,
• dazu ausgebildet ist, dem Rotorblatteisdetektionssystem (12) in einem Prüfbetrieb den mindestens einen modifizierten Wert zur Auswertung zur Verfügung zu stellen, und
• dazu ausgebildet ist, zu prüfen, ob das Rotorblatteisdetektionssystem (12) nach Auswertung des mindestens einen modifizierten Werts eine Warnung ausgibt.

## Claims

1. Method for testing a rotor blade ice detection system (12) for a wind turbine (28), wherein the rotor blade ice detection system (12) is configured to output a warning in the event of icing or damage to a rotor blade being monitored, and the method has the following steps:
• acquiring data relating to a rotor blade to be monitored,
• providing at least one value of an operating and/or environmental parameter,
• modifying the at least one value provided in such a manner that the at least one modified value differs from an actual value of the parameter,
• evaluating the data and the at least one modified value by means of the rotor blade ice detection system (12), and
• testing whether the rotor blade ice detection system (12) outputs a warning.

2. Method according to claim 1, **characterized in that** the evaluation of the data by means of the rotor blade ice detection system (12) comprises determining a real natural frequency of the rotor blade to be monitored.

3. Method according to claim 1 or 2, **characterized in that** the evaluation of the at least one modified value by means of the rotor blade ice detection system (12) comprises determining an expected natural frequency of the rotor blade to be monitored.

4. Method according to claims 2 and 3, **characterized in that** the rotor blade ice detection system (12) outputs a warning, if the real natural frequency is lower than the expected natural frequency.

5. Method according to one of the claims 1 to 4, **characterized in that** the at least one value comprises an operating parameter which is provided by a wind turbine open-loop controller (10).

6. Method according to one of the claims 1 to 5, **characterized in that** the at least one value comprises an environmental parameter which is provided by a sensor arranged in or on the rotor blade.

7. Method according to one of the claims 1 to 6, **characterized in that** the at least one value comprises a measured real temperature and the at least one modified value comprises a modified temperature which is lower than the measured temperature.

8. Method according to one of the claims 1 to 7, **characterized in that** the at least one value comprises a measured real wind speed and a real active power and the at least one modified value comprises a modified wind speed which is greater than the measured real wind speed and a modified active power which is greater than the real active power.

9. Method according to claim 8, **characterized in that** the modified wind speed and the modified active power correspond to a power curve of the wind turbine (28).

10. Method according to one of the claims 1 to 9, **characterized in that** the operation of testing whether the rotor blade ice detection system (12) outputs a warning is carried out by a wind turbine open-loop controller (10).

11. Method according to one of the claims 1 to 10, **characterized in that** the modification of the at least one value is carried out by the rotor blade ice detection system (12).

12. Method according to one of the claims 1 to 10, **characterized in that** the modification of the at least one value is carried out by a wind turbine open-loop controller (10).

13. Rotor blade ice detection system (12) for a wind turbine (28), having
• a sensor (20) for arrangement on or in a rotor blade to be monitored,
• an interface (14) for reading in values of at least one operating and/or environmental parameter, and
• an evaluation device (18) for evaluating data acquired using the sensor (20) and data read in via the interface (14), the evaluation device (18) being configured to output a warning in the event of evidence of icing of the rotor blade to be monitored, **characterized in that**
• the rotor blade ice detection system (12) has a device (24) for modifying at least one value read in via the interface (14) in such a manner that the at least one modified value differs from an actual value of the parameter and is configured to provide the evaluation device (18) with the at least one modified value for evaluation in a test mode.

14. Wind turbine (28) having a rotor blade ice detection system (12) according to claim 13.

15. Wind turbine (28) having
• a rotor blade,
• a rotor blade ice detection system (12) which has a sensor (20) arranged in or on the rotor blade, an interface (14) for receiving values of at least one operating and/or environmental parameter and an evaluation device (18) for evaluating data acquired using the sensor (20) and values received via the interface (14), wherein the evaluation device (18) is configured to output a warning in the event of evidence of icing of the rotor blade to be monitored, and
• a wind turbine open-loop controller (10) which is connected to the interface (14) and is configured to provide the rotor blade ice detection system (12) with values of the at least one operating and/or environmental parameter, **characterized in that** the wind turbine open-loop controller (10)
• has a device (24) for modifying at least one value of an operating and/or environmental parameter in such a manner that the at least one modified value differs from an actual value of the parameter,
• is configured to provide the rotor blade ice detection system (12) with the at least one modified value for evaluation in a test mode, and
• is configured to test whether the rotor blade ice detection system (12) outputs a warning after the at least one modified value has been evaluated.

## Revendications

1. Procédé de vérification d'un système de détection de glace sur les pales d'un rotor (12) pour une éolienne (28), le système de détection de glace sur les pales d'un rotor (12) étant constitué pour délivrer un avertissement en cas de givrage ou d'endommagement d'une pale de rotor surveillée, et le procédé présentant les étapes suivantes :
• saisie de données d'une pale de rotor à surveiller,
• fourniture d'au moins une valeur d'un paramètre de fonctionnement et/ou d'environnement,
• modification de la valeur fournie au moins au nombre de un de telle sorte que la valeur modifiée au moins au nombre de un diffère d'une valeur effective du paramètre,
• analyse des données et de la valeur modifiée au moins au nombre de un par le système de détection de glace sur les pales d'un rotor (12), et
• vérification indiquant si le système de détection de glace sur les pales d'un rotor (12) délivre un avertissement.

2. Procédé selon la revendication 1, **caractérisé en ce que** l'analyse des données par le système de détection de glace sur les pales d'un rotor (12) comprend une détermination d'une fréquence propre réelle de la pale de rotor à surveiller.

3. Procédé selon la revendication 1 ou 2, **caractérisé en ce que** l'analyse de la valeur modifiée au moins au nombre de un par le système de détection de glace sur les pales d'un rotor (12) comprend la détermination d'une fréquence propre attendue de la pale de rotor à surveiller.

4. Procédé selon les revendications 2 et 3, **caractérisé en ce que** le système de détection de glace sur les pales d'un rotor (12) délivre un avertissement si la fréquence propre réelle est inférieure à la fréquence propre attendue.

5. Procédé selon l'une des revendications 1 à 4, **caractérisé en ce que** la valeur au moins au nombre de un comprend un paramètre de fonctionnement qui est mis à disposition par une commande d'éolienne (10).

6. Procédé selon l'une des revendications 1 à 5, **caractérisé en ce que** la valeur au moins au nombre de un comprend un paramètre d'environnement qui est mis à disposition par un capteur disposé dans ou sur la pale de rotor.

7. Procédé selon l'une des revendications 1 à 6, **caractérisé en ce que** la valeur au moins au nombre de un comprend une température réelle mesurée et la valeur modifiée au moins au nombre de un comprend une température modifiée qui est inférieure à la température mesurée.

8. Procédé selon l'une des revendications 1 à 7, **caractérisé en ce que** la valeur au moins au nombre de un comprend une vitesse de vent réelle mesurée et une puissance active réelle, et la valeur modifiée au moins au nombre de un comprend une vitesse de vent modifiée qui est supérieure à la vitesse de vent réelle mesurée, et une puissance active modifiée qui est supérieure à la puissance active réelle.

9. Procédé selon la revendication 8, **caractérisé en ce que** la vitesse de vent modifiée et la puissance active modifiée correspondent à une courbe caractéristique de puissance de l'éolienne (28).

10. Procédé selon l'une des revendications 1 à 9, **caractérisé en ce que** la vérification indiquant si le système de détection de glace sur les pales d'un rotor (12) délivre un avertissement est effectuée par une commande d'éolienne (10).

11. Procédé selon l'une des revendications 1 à 10, **caractérisé en ce que** la modification de la valeur au moins au nombre de un est effectuée par le système de détection de glace sur les pales d'un rotor (12).

12. Procédé selon l'une des revendications 1 à 10, **caractérisé en ce que** la modification de la valeur au moins au nombre de un est effectuée par une commande d'éolienne (10).

13. Système de détection de glace sur les pales d'un rotor (12) pour une éolienne (28), avec
• un capteur (20) destiné à être disposé sur ou dans une pale de rotor à surveiller,
• une interface (14) destinée à entrer des valeurs d'au moins un paramètre de fonctionnement et/ou d'environnement, et
• un dispositif d'analyse (18) pour l'analyse de données saisies par le capteur (20) et de valeurs lues par le biais de l'interface (14), le dispositif d'analyse (18) étant constitué pour, en cas de signe de givrage de la pale de rotor à surveiller, délivrer un avertissement, **caractérisé en ce que**
• le système de détection de glace sur les pales d'un rotor (12) présente un dispositif destiné à la modification (24) d'au moins une valeur lue par le biais de l'interface (14) de telle sorte que la valeur modifiée au moins au nombre de un diffère d'une valeur effective du paramètre, et est constitué pour, dans un mode de vérification, mettre à la disposition du dispositif d'analyse (18) la valeur modifiée au moins au nombre de un à des fins d'analyse.

14. Eolienne (28) avec un système de détection de glace sur les pales d'un rotor (12) selon la revendication 13.

15. Eolienne (28), avec
• une pale de rotor,
• un système de détection de glace sur les pales d'un rotor (12) qui présente un capteur (20) disposé dans ou sur la pale de rotor, une interface (14) pour l'enregistrement de valeurs d'au moins un paramètre de fonctionnement et/ou d'environnement et un dispositif d'analyse (18) pour l'analyse de données saisies avec le capteur (20) et de valeurs enregistrées par le biais de l'interface (14), le dispositif d'analyse (18) étant constitué pour délivrer un avertissement en cas de signe de givrage de la pale de rotor à surveiller, et
• une commande d'éolienne (10) qui est raccordée à l'interface (10) et qui est constituée pour mettre à la disposition du système de détection de glace sur les pales d'un rotor (12) des valeurs du paramètre de fonctionnement et/ou d'environnement au moins au nombre de un, **caractérisée en ce que** la commande d'éolienne (10)
• présente un dispositif pour la modification (24) d'au moins une valeur d'un paramètre de fonctionnement et/ou d'environnement de telle sorte que la valeur modifiée au moins au nombre de un diffère d'une valeur effective du paramètre,
• est constituée pour, dans un mode de vérification, mettre à disposition du système de détection de glace sur les pales d'un rotor (12) la valeur modifiée au moins au nombre de un à des fins d'analyse, et
• est constituée pour vérifier si le système de détection de glace sur les pales d'un rotor (12) délivre un avertissement après l'analyse de la valeur modifiée au moins au nombre de un.
